# FASCICULE DE BREVET EUROPEEN

(11) **EP 4 259 592 B1**
(45) Date de publication et mention de la délivrance du brevet: **27.11.2024**
(21) Numéro de dépôt: 21835281.3
(22) Date de dépôt: 10.12.2021
(51) Int. Cl.: C04B 24/26, C04B 28/04, C04B 24/16

(54) **ADJUVANT POUR FLUIDIFIER UNE COMPOSITION CIMENTAIRE À TENEUR RÉDUITE EN CIMENT**
ZUSATZMITTEL ZUM VERFLÜSSIGEN EINER ZEMENTZUSAMMENSETZUNG MIT REDUZIERTEM ZEMENTGEHALT
ADMIXTURE FOR FLUIDIFYING A CEMENTITIOUS COMPOSITION WITH REDUCED CEMENT CONTENT

(30) Priorité: 11.12.2020 FR 2013093
(43) Date de publication de la demande: 18.10.2023
(73) Titulaire: CHRYSO, 92400 Courbevoie (FR)
(72) Inventeur: PELLERIN, Bruno, 77210 AVON (FR); HERVE, Mickaël, 45300 COURCELLES LE ROI (FR); GIRAUDEAU, Claire, 91530 SAINT-CHERON (FR); FERRARI, Lucia, 91400 ORSAY (FR); KOCABA, Vanessa, 94000 CRETEIL (FR)
(74) Mandataire: Lavoix
(86) Numéro de dépôt international: PCT/EP2021/085256
(87) Numéro de publication internationale: WO 2022/123037

(56) Documents cités:
- EP-A2- 1 609 770
- EP-B1- 1 609 770
- WO-A1-2019/094060

## Description

La présente invention concerne l'utilisation d'un adjuvant pour améliorer le maintien de fluidité d'une composition cimentaire à teneur réduite en clinker, une composition cimentaire adjuvantée et ses utilisations.

Les compositions cimentaires usuelles comprennent une proportion importante de clinker. Par exemple, une composition cimentaire selon la norme NF EN 197-1 de 2012 comprend au moins 65 % en poids de clinker.

On recherche à abaisser la teneur en clinker des compositions cimentaires afin de réduire leur impact carbone, tout en maintenant leurs propriétés mécaniques et rhéologiques. Des nouvelles compositions cimentaires dans lesquelles une partie du clinker est remplacée par des argiles activées et des calcaires commencent à voir le jour.

La demande de brevet WO 2010/130511 décrit une composition cimentaire comprenant de l'argile activée.

Un des freins au développement de telles compositions est qu'abaisser la teneur en clinker conduit à la détérioration du maintien de fluidité de la composition cimentaire.

La plupart des adjuvants connus pour améliorer le maintien de fluidité d'une composition cimentaire à teneur usuelle en ciment ne sont pas assez performants pour améliorer celui d'une composition cimentaire à teneur réduite en ciment.

La demande WO 2010/040915 enseigne qu'ajouter un polymère cationique hydrosoluble spécifique dans une composition hydraulique comprenant des argiles calcinées, et éventuellement un plastifiant, permet un meilleur maintien d'ouvrabilité.

La demande WO 2019/094060 décrit une composition cimentaire comprenant :
- de 30 à 95 % en poids de ciment hydratable, de calcaire ou de leurs mélanges,
- de 5 à 70 % en poids d'argile calcinée comprenant de 1 à 15 % en poids de Fe₂O₃,
- de 0,002 à 0,2 % en poids d'une alcanolamine tertiaire,
les proportions étant par rapport au poids sec de composition cimentaire. L'alcanolamine tertiaire permet d'améliorer la réactivité pouzzolanique de l'argile activée et ainsi d'améliorer le maintien de fluidité à des âges précoces et tardifs.

Il existe un besoin de développer des méthodes alternatives pour améliorer le maintien de fluidité des compositions cimentaires à teneur réduite en clinker.

Un des objectifs est de la présente demande est de fournir un adjuvant utilisable comme fluidifiant de telles compositions cimentaires.

Un autre des objectifs est de fournir une composition à faible teneur en clinker et comprenant des argiles activées dont les propriétés mécaniques et rhéologiques permettent son utilisation comme composition cimentaire.

Selon un premier objet, l'invention concerne l'utilisation d'un adjuvant comprenant un polymère comprenant des unités de formules (I) et (II) suivantes : 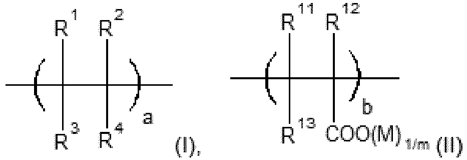 dans lesquelles :
- R¹ et R² représentent indépendamment un hydrogène ou un méthyle,
- R³ représente un hydrogène ou un groupe de formule -COO(M)_{1/m}
- R⁴ représente un groupe de formule -(CH₂)ₚ-(OAlk)_{q}-R₅ dans lequel :
   - p représente 1 ou 2,
   - q représente un nombre entier de 3 à 300,
   - le Alk de chaque unité OAlk du groupe -(OAlk)_{q}- représente indépendamment un alkylène linéaire ou ramifié comprenant de 2 à 4 atomes de carbone,
   - R⁵ représente -OH ou un alkoxyle linéaire ou ramifié comprenant de 1 à 4 atomes de carbone,
- R¹¹ et R¹² représentent indépendamment un hydrogène ou un méthyle,
- R¹³ représente un hydrogène ou un groupe de formule -COO(M)_{1/m},
- M représente H ou un cation de valence m,
- lorsque M représente H, m représente 1 et lorsque M représente un cation, m est la valence du cation M,
- a est un nombre de 0,05 à 0,25, tel que (100 x a) représente le pourcentage molaire d'unités de formule (I) au sein du polymère, et
- b est un nombre de 0,75 à 0,95, tel que (100 x b) représente le pourcentage molaire d'unités de formule (II) au sein du polymère,
comme fluidifiant d'une composition cimentaire comprenant :
- de 20 à 64 % en poids de clinker,
- de 5 à 60 % en poids d'argile activée,
- de 0 à 35 % en poids de calcaire,
- de 0 à 10 % en poids de sulfate de calcium,
les proportions étant par rapport au poids sec de la composition cimentaire.

Les modes de réalisations suivants pour les formules (I) et (II) des unités du polymère peuvent être considérés indépendamment ou combinés entre eux :
- R¹ représente H,
- R³ représente H,
- R¹ et R³ représentent H,
- R² représente un méthyle,
- p représente 1,
- Alk représente -CH₂-CH₂-, -CH₂-CH₂-CH₂-, -CH₂-CH₂-CH₂-CH₂-, -CH₂-CHMe-, - CHMe-CH₂-,
- au moins 80 % des Alk du groupe -(OAlk)_{q}- représentent -CH₂-CH₂-, voire tous les Alk du groupe -(OAlk)_{q}- représentent -CH₂-CH₂-,
- q représente un nombre entier de 5 à 200, notamment de 10 à 100, de préférence de 25 à 75,
- R⁵ représente -OH ou -OMe, de préférence R⁵ représente -OH,
- la somme de a et de b vaut 1,
- R¹¹ représente H,
- R¹³ représente H,
- R¹¹ et R¹³ représentent H,
- R¹² représente H, et/ou
- M représente H ou un cation monovalent ou bivalent, m représentant alors 1 ou 2, le cation monovalent étant de préférence choisi parmi un sel d'ammonium NH₄⁺, un cation ammonium primaire, secondaire, tertiaire ou quaternaire et un cation d'un métal alcalin, tels qu'un ion sodium, lithium ou potassium, et le cation bivalent étant de préférence un cation d'un métal alcalinoterreux, tel qu'un ion magnésium ou calcium,
- a est un nombre de 0,05 à 0,20, de préférence a représente un nombre entre 0,10 et 0,20,
- b est un nombre de 0,80 à 0,95, de préférence b représente un nombre entre 0,80 et 0,90.

De préférence, les unités de formule (I) du polymère ont la formule (I') suivante : 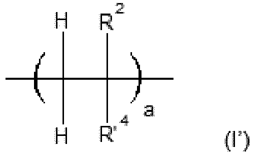 dans laquelle :
- R² représente indépendamment un hydrogène ou un méthyle, de préférence un méthyle,
- R'⁴ représente un groupe de formule -CH₂-(O-CH₂-CH₂)_{q}-R₅ dans lequel :
   - q représente un nombre entier de 3 à 500,
   - R⁵ représente -OH ou -OMe, de préférence -OH,
- a est un nombre de 0,05 à 0,25, tel que (100 x a) représente le pourcentage molaire d'unités de formule (I') au sein du polymère.

De préférence, les unités de formule (II) du polymère ont la formule (II') suivante : 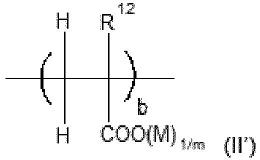 dans laquelle :
- R¹² représente un hydrogène ou un méthyle, de préférence un hydrogène,
- M représente H ou un cation de valence m,
- lorsque M représente H, m représente 1 et lorsque M représente un cation, m est la valence du cation M,
- b est un nombre de 0,75 à 0,95, tel que (100 x b) représente le pourcentage molaire d'unités de formule (II') au sein du polymère.

De préférence, le polymère de l'adjuvant utilisé comprend des unités de formules (I') et (II').

Les modes de réalisations suivants pour les formules (I') et (II') du polymère de l'adjuvant peuvent être considérés indépendamment ou combinés entre eux :
- q représente un nombre entier de 5 à 200, notamment de 10 à 100, de préférence de 25 à 75,
- R⁵ représente -OH ou -OMe, de préférence R⁵ représente -OH,
- a est un nombre de 0,05 à 0,20, de préférence a représente un nombre entre 0,10 et 0,20,
- b est un nombre de 0,80 à 0,95, de préférence b représente un nombre entre 0,80 et 0,90,
- la somme de a et de b vaut 1 (ce qui implique que le polymère est constitué des unités de formules (I) et (II)), et/ou
- M représente H ou un cation monovalent ou bivalent, m représentant alors 1 ou 2, le cation monovalent étant de préférence choisi parmi un sel d'ammonium NH₄⁺, un cation ammonium primaire, secondaire, tertiaire ou quaternaire et un cation d'un métal alcalin, tes qu'un ion sodium, lithium ou potassium, et le cation bivalent étant de préférence un cation d'un métal alcalinoterreux, tel qu'un ion magnésium ou calcium.

Le polymère peut comprendre une ou plusieurs unité(s) supplémentaire(s) en plus de celles de formule (I) et (II). De préférence, le polymère est exempt d'unité de formule (V) suivante : 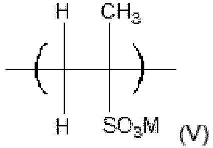 dans laquelle M représente H ou un cation, tel que le sodium. De manière particulièrement préférée, le polymère est exempt de groupes acide sulfonique et sulfonate.

De préférence, le polymère de l'adjuvant utilisé est constitué des unités de formules (I) et (II). Il ne comprend pas d'unité supplémentaire en plus de celles de formule (I) et (II). La somme de a et de b vaut alors 1.

La masse molaire moyenne en poids du polymère est généralement de 10 000 à 200 000 g/mol, notamment de 10 000 à 100 000 g/mol.

Généralement, le polymère est obtenu par polymérisation radicalaire libre.

Le polymère utilisé est donc un polymère peigne dont les groupes pendants sont liés à la chaine principale carbonée par des groupes éther. Les inventeurs ont observé que le polymère tel que défini ci-dessus est capable de fluidifier une composition cimentaire comprenant :
- de 20 à 64 % en poids de clinker,
- de 5 à 60 % en poids d'argile activée,
- de 0 à 35 % en poids de calcaire,
- de 0 à 10 % en poids de sulfate de calcium,
les proportions étant par rapport au poids sec de la composition cimentaire. Ce polymère permet en particulier de fluidifier plus efficacement une telle composition cimentaire qu'un polymère peigne dont les groupes pendants sont liés à la chaine principale carbonée par des groupes esters.

De plus, les inventeurs ont observé qu'un polymère, dont le pourcentage molaire en unités de formule (I) est de 5 à 25 % (donc a de 0,05 à 0,25), notamment de 5 à 20 % (donc a de 0,05 à 0,20), de préférence de 10 à 20 % (donc a de 0,10 à 0,20), est un fluidifiant plus performant de telles compositions cimentaires que lorsque ce pourcentage molaire est supérieur.

L'adjuvant comprenant le polymère défini dans la demande permet d'augmenter le maintien de fluidité (également appelé maintien d'ouvrabilité) d'une composition cimentaire telle que définie ci-dessus. Le maintien de fluidité peut notamment être mesuré à l'aide d'un rhéomètre en effectuant plusieurs mesures de la contrainte appliquée pour obtenir chaque valeur de vitesse de déformation. De préférence, l'adjuvant permet d'améliorer le maintien de fluidité de la composition cimentaire sur une durée supérieure ou égale à 90 minutes, notamment supérieure à 120 minutes, voire même supérieure à 240 minutes.

L'adjuvant est généralement utilisé de manière que la proportion en polymère soit de 0,001 % à 5 % en poids, notamment de 0,005 % à 1 %, de préférence de 0,01 % à 0,2 % par rapport au poids sec de la composition cimentaire à fluidifier.

L'adjuvant peut en outre comprendre un agent retardateur de prise.

Dans le cadre de cette demande, on entend par le terme « agent retardateur de prise » désigner un composé ayant pour effet de retarder la prise de la composition cimentaire, c'est-à-dire de retarder ou inhiber les phénomènes liés à cette prise tels que les phénomènes d'hydratation, induisant de ce fait un durcissement plus tardif de la composition. De manière générale, un retardateur de prise retarde le temps de prise d'une composition cimentaire dans laquelle il a été introduit à un dosage d'au plus 5 % en poids sec par rapport au poids du clinker, le temps de prise étant mesuré selon le test EN480-2 (2006). De préférence, le temps de prise est retardé d'au moins 30 minutes par rapport à une composition cimentaire témoin.

L'agent retardateur de prise est notamment choisi parmi :
- un acide carboxylique ou hydroxycarboxylique sous forme neutre ou un sel de celui-ci, ceux présentant un pK_{A} de 2 à 5 étant préférés. L'acide carboxylique étant notamment choisi parmi l'acide acétique, l'acide gluconique, l'acide citrique, l'acide tartrique, l'acide malique ou un mélange de ceux-ci,
- un acide phosphonique sous forme neutre ou un sel de celui-ci, notamment choisi parmi ceux comprenant un groupe -N[-(CH₂)-PO(OH)₂]₂ ou un groupe >C[-PO(OH)₂]₂, de préférence choisi parmi l'acide amino tri méthylène phosphonique (ATMP), l'acide éthylène diamine tétra méthylène phosphonique (EDTMP), l'acide 1-hydroxyéthylidène -1,1,-diphosphonique (HEDP), et leurs sels, notamment sodiques.
- un sucre, notamment choisi parmi le glucose, l'acide gluconique sous forme neutre ou un sel de celui-ci ou encore sous forme de lactone, le dextrose, le fructose, le galactose, le saccharose, le maltose, le lactose et le mannose et leurs mélanges,
- un phosphate, notamment choisi parmi le tripolyphosphate de sodium et le pyrophosphate tétrapotassique et leurs mélanges.
- et les mélanges de ceux-ci.

Le sel de l'acide carboxylique est de préférence un sel de métal alcalin, tel que le sodium, le lithium ou le potassium, un sel de métal alcalinoterreux, tel qu'un sel de magnésium ou de calcium ou un sel d'ammonium NH₄⁺ ou de cation ammonium primaire, secondaire, tertiaire ou quaternaire.

L'agent retardateur de prise préféré est un acide phosphonique sous forme neutre ou un sel de celui-ci, de préférence un de ceux décrits ci-dessus, l'acide gluconique sous forme neutre ou un sel de celui-ci, de préférence le gluconate de sodium, ou un mélange de ceux-ci. Les inventeurs ont en effet observé qu'un adjuvant comprenant, en plus du polymère défini ci-dessus, un de ces agents retardateurs préféré, permet de fluidifier plus efficacement la composition cimentaire définie dans la demande que d'autres d'agents retardateurs de prise.

Généralement, au sein de l'adjuvant, le ratio du poids de polymère par rapport au poids de l'agent retardateur de prise est de 1/2 à 2/1, de préférence de 2/3 à 3/2.

L'adjuvant utilisé peut en outre comprendre un additif anti-mousse et/ou un additif entraineur d'air, et un ou plusieurs solvants tel que de l'eau.

L'adjuvant peut être constitué de polymère défini ci-dessus et éventuellement d'un agent retardateur de prise.

La composition cimentaire à fluidifier par l'adjuvant comprend :
- de 20 à 64 % en poids, de préférence de 35 à 60 % en poids, de clinker,
- de 5 à 60 % en poids d'argile activée,
- de 0 à 35 % de calcaire,
- de 0 à 10 % de sulfate de calcium,
les proportions étant en poids par rapport au poids sec de la composition cimentaire.

Une telle composition cimentaire n'est pas usuelle en ce que sa proportion en clinker est faible et sa proportion en argile activée est élevée. La composition cimentaire est notamment de type LC³ (« limestone calcined clay cement » en Anglais), et/ou elle peut être un CEM II/C-M Q -L ou LL de la norme provisoire prEN 197-5.

Le clinker est notamment du clinker Portland, de préférence du clinker Portland tel que défini dans l'ouvrage « Cement Chemistry". Harry F. W. Taylor. Edition, 2., Academic Press, 1990).

La composition cimentaire comprend de 0 à 35 % en poids, de préférence de 10 à 30 % en poids de calcaire, les proportions étant en poids par rapport au poids sec de la composition cimentaire.

Le calcaire est de préférence tel que défini dans la norme Ciment NF EN 197-1(2012) paragraphe 5.2.6.

La composition cimentaire comprend de 0 à 10 % en poids, de préférence de 1 à 5 % en poids de sulfate de calcium, les proportions étant en poids par rapport au poids sec de la composition cimentaire.

Le sulfate de calcium peut être sous forme déshydratée, hydratée ou un mélange de ceux-ci. Le sulfate de calcium hydraté peut être monohydraté, dihydraté ou un mélange de ceux-ci. Le sulfate de calcium dihydraté de formule CaSO₄.2H₂O est du gypse. Le gypse est donc un exemple de sulfate de calcium.

Par « argile activée », on entend une argile ayant subi une déshydroxylation. Tel qu'utilisé ici, le terme « déshydroxylation » se réfère à la perte d'un ou plusieurs groupes hydroxy (OH) sous forme d'eau (H₂O) d'une argile.

De préférence, l'argile activée est une argile kaolinique (également appelée kaolinitique) ayant été activée. Par « argile kaolinique », on entend une argile qui comprend de la kaolinite. Une « argile kaolinique ayant été activée » est une argile kaolinique, dont au moins une partie de la kaolinite a été déshydroxylée en métakaolin. Par exemple, lors du chauffage de la kaolinite minérale argileuse de 300 à 600°C, de l'eau est perdue selon la réaction suivante.

Al₂Si₂O₅(OH)₄ → Al₂Si₂O₇ + 2H₂O

Ainsi, une argile kaolinique ayant été activée comprend, voire est constituée de, métakaolin. Le métakaolin est très réactif en présence d'eau et de portlandite pour former des phases hydratées, notamment le silicate de calcium alumineux hydratés (C-A-S-H) et la strâtlingite.

Au sens de la demande, l'argile kaolinique ayant été activée peut comprendre de la kaolinite résiduelle (qui n'a pas été déshydroxylée lors de l'activation) en une teneur, telle que mesurée par analyse thermogravimétrique (ATG), typiquement par montée en température entre 30 et 900°C, avec, par exemple, une vitesse de chauffe de 10°C/min, ce qui permet de quantifier la perte de masse correspondant à l'eau libérée par l'argile. Cette teneur en kaolinite résiduelle est généralement inférieure ou égale 50 % en poids, typiquement inférieure ou égale à 40 % en poids, notamment inférieure ou égale à 30 % en poids, de préférence inférieure ou égale à 20 % en poids, de manière particulièrement préférée inférieure ou égale à 10 % en poids, par rapport au poids de l'argile activée. L'argile kaolinique ayant été activée peut-être exempte de kaolinite (la déshydroxylation a alors été totale).

La déshydroxylation peut être effectuée par un traitement thermique, mécanique et/ou chimique.

Le traitement mécanique peut par exemple être celui décrit dans l'article « Préparation of pozzolanic addition by mechanical treatment of kaolin clay » Aleksandra Mitrović, Miodrag Zdujić. International Journal of Mineral Processing 132 (2014) 59-66.

Le traitement thermique est une calcination, généralement à une température comprise entre 400 et 700 °C (température de déshydroxylation). On parle alors d'argile kaolinique ayant été calcinée.

La calcination se fait le plus souvent dans un four rotatif dans lequel l'argile est introduite. Le kaolin se transforme au moins partiellement en une phase amorphe et réactif, doté d'un fort pouvoir pouzzolanique, appelée métakaolin. L'argile calcinée est ensuite broyée. La calcination peut se faire par méthode « flash » où l'argile est broyée et les fines particules sont calcinées en quelques secondes dans un four.

Quel que soit la méthode d'activation utilisée (notamment mécanique ou thermique), l'argile activée peut subir une activation supplémentaire par voie chimique grâce à des composés aptes à complexer des cations, de préférence des composés aptes à complexer le calcium.

L'argile kaolinique ayant été activée peut par exemple être de l'ARGICAL 1000 d'AGS.

La composition cimentaire peut comprendre un ou plusieurs additifs, par exemple un additif anti-mousse, un additif entraineur d'air et/ou un agent de mouture.

L'agent de mouture peut être ou non une alcanolamine.

De préférence, la composition cimentaire comprend moins de 0,001 % en poids cumulé de diéthanolisopropanolamine (DEIPA), de triisopropanolamine (TIPA), de N,N-bis(2-hydroxypropyl)-N-(hydroxyéthyl)amine (EDIPA) et de triéthanolamine (TEA) par rapport au poids sec de la composition cimentaire. De manière particulièrement préférée, la composition cimentaire et/ou l'adjuvant est(sont) exempt(s) de DEIPA, TIPA, EDIPA et TEA.

De préférence, la composition cimentaire comprend moins de 0,001 % en poids d'alcanolamine tertiaire comprenant de 1 à 6 atomes de carbone par rapport au poids sec de la composition cimentaire. La composition cimentaire et/ou l'adjuvant est(sont) généralement exempt(s) d'alcanolamine tertiaire comprenant de 1 à 6 atomes de carbone, voire même d'alcanolamine comprenant de 1 à 6 atomes de carbone, voire même d'alcanolamine.

De préférence, la composition cimentaire et/ou l'adjuvant sont exempts de polymère cationique présentant une densité de charges cationiques supérieure à 0,5 meq/g et une viscosité intrinsèque inférieure à 1 dl/g, voire même de polymère cationique. La viscosité intrinsèque et la densité de charges cationiques sont telles que mesurées dans la demande WO 2010/040915. La densité de charges cationiques mesurée par titration colloïdale par un polymère anionique en présence d'un indicateur coloré sensible à l'ionicité du polymère en excès. Les mesures de viscosité intrinsèque des polymères cationiques sont réalisées dans une solution NaCl 3 M, avec un viscosimètre capillaire de type Ubbelhode, à 25°C. On mesure le temps d'écoulement dans le tube capillaire entre 2 repères pour le solvant et des solutions du polymère à différentes concentrations. On calcule la viscosité réduite en divisant la viscosité spécifique par la concentration de la solution de polymère. La viscosité spécifique est obtenue pour chaque concentration, en divisant la différence entre les temps d'écoulement de la solution de polymère et du solvant, par le temps d'écoulement du solvant. En traçant la droite de la viscosité réduite en fonction de la concentration de la solution de polymère, on obtient une droite. L'intersection avec l'ordonnée de cette droite correspond à la viscosité intrinsèque pour une concentration égale à zéro.

Dans un mode de réalisation, la composition cimentaire est constituée de :
- de 20 à 64 % en poids de clinker,
- de 5 à 60 % en poids d'argile activée,
- de 0 à 35 % en poids de calcaire,
- de 0 à 10 % en poids de sulfate de calcium,
- de 0 à 5 % en poids d'un agent de mouture,
- de 0 à 5 % en poids additif anti-mousse, et
- de 0 à 5 % en poids d'additif entraineur d'air,
les proportions étant par rapport au poids sec de la composition cimentaire.

De préférence, au sein de la composition cimentaire, le ratio massique du poids d'argile calcinée par rapport au poids de calcaire est de 1/2 à 5/1, de préférence de 1/1 à 3/1, de manière particulièrement préférée de 3/2 à 5/2.

De préférence, au sein de la composition cimentaire, le ratio massique du poids de clinker par rapport au poids d'argile activée est de 1/4 à 4/1, notamment de 1/1 à 3/1, de préférence de 3/2 à 5/2.

De préférence, au sein de la composition cimentaire, le ratio massique du poids de clinker par rapport au poids de calcaire est de 1/1 à 10/1, notamment de 3/1 à 5/1.

De préférence, la composition cimentaire contient :
- de 5 à 25 % en poids, de préférence de 6 à 20 % en poids, d'Al₂O₃,
- de 25 à 55 % en poids, de préférence de 40 à 50 % en poids, de CaO,
- de 20 à 40 % en poids, de préférence de 22 à 35 % en poids, de SiO₂,
- de 2 à 10 % en poids, de préférence de 2 à 5 % en poids de SO₃, et/ou
- de 0,1 à 10 % en poids, de préférence de 0,5 à 8 % en poids, de Fe₂O₃,
par rapport à la somme des poids secs de clinker, d'argile activée, de calcaire et de sulfate de calcium.

Selon un deuxième objet, l'invention concerne une composition cimentaire adjuvantée comprenant :
- une composition cimentaire comprenant :
   - de 20 à 64 % en poids de clinker,
   - de 5 à 60 % en poids d'argile activée,
   - de 0 à 35 % en poids de calcaire,
   - de 0 à 10 % en poids de sulfate de calcium,
   les proportions en clinker, en argile activée, en calcaire et en sulfate de calcium étant par rapport au poids sec de la composition cimentaire, et
- l'adjuvant tel que défini ci-dessus,
la proportion en polymère de l'adjuvant étant de 0,001 % à 5 % en poids, notamment de 0,005 % à 1 %, de préférence de 0,01 % à 0,2 % par rapport au poids sec de la composition cimentaire.

Au sens de la demande, on entend par « composition cimentaire adjuvantée » une composition comprenant la composition cimentaire telle que définie ci-dessus et l'adjuvant tel que défini ci-dessus, et par « composition cimentaire » la composition cimentaire exempte d'adjuvant (il s'agit de la composition cimentaire à fluidifier).

Les modes de réalisation définis ci-dessus pour la composition cimentaire sont applicables pour la composition cimentaire adjuvantée.

La composition cimentaire adjuvantée peut comprendre un agent de mouture ou en être exempte. L'agent de mouture peut être ou non une alcanolamine.

De préférence, la composition cimentaire adjuvantée comprend moins de 0,001 % en poids cumulé de diéthanolisopropanolamine (DEIPA), de triisopropanolamine (TIPA), de N,N-bis(2-hydroxypropyl)-N-(hydroxyéthyl)amine (EDIPA) et de triéthanolamine (TEA) par rapport au poids sec de la composition cimentaire adjuvantée. De manière particulièrement préférée, la composition cimentaire adjuvantée est exempte de DEIPA, TIPA, EDIPA et TEA.

De préférence, la composition cimentaire adjuvantée comprend moins de 0,001 % en poids d'alcanolamine tertiaire comprenant de 1 à 6 atomes de carbone par rapport au poids sec de la composition cimentaire. La composition cimentaire adjuvantée est généralement exempte d'alcanolamine tertiaire comprenant de 1 à 6 atomes de carbone, voire même d'alcanolamine.

De préférence, outre l'adjuvant défini ci-dessus, la composition cimentaire adjuvantée est exempte d'adjuvant fluidifiant et/ou susceptible de retarder la prise de la composition cimentaire adjuvantée.

De préférence, la composition cimentaire adjuvantée est exempte de polymère cationique présentant une densité de charges cationiques supérieure à 0,5 meq/g et une viscosité intrinsèque inférieure à 1 dl/g, voire même de polymère cationique.

La composition cimentaire adjuvantée est de préférence constituée de la composition cimentaire définie ci-dessus et de l'adjuvant défini ci-dessus.

De préférence, la composition cimentaire adjuvantée respecte les critères définis dans la norme ASTM C1157 de 2020.

Selon un troisième objet, l'invention concerne un procédé d'amélioration du maintien fluidité (également appelé maintien d'ouvrabilité) dans le temps d'une composition cimentaire comprenant la mise en contact de la composition cimentaire définie ci-dessus avec un adjuvant tel que défini ci-dessus. Cette amélioration est de préférence à long terme, à savoir sur une durée supérieure ou égale à 90 minutes, notamment supérieure à 120 minutes, voire même supérieure à 240 minutes.

Selon un quatrième objet, l'invention concerne un procédé de préparation de la composition cimentaire adjuvantée comprenant l'étape de mélange de la composition cimentaire telle que définie ci-dessus, de l'adjuvant tel que défini ci-dessus et d'eau.

Selon un cinquième objet, l'invention concerne l'utilisation de la composition cimentaire adjuvantée définie ci-dessus pour la préparation d'une composition hydraulique.

Selon un sixième objet, l'invention concerne une composition hydraulique comprenant (voire étant constituée de) la composition cimentaire adjuvantée définie ci-dessus, de l'eau, un granulat et éventuellement une ou plusieurs additions minérales. La composition hydraulique est de préférence une composition de béton, mortier ou chape.

Par « granulats », on entend un ensemble de grains minéraux de diamètre moyen compris entre 0 et 125 mm. Selon leur diamètre, les granulats sont classés dans l'une des six familles suivantes : fillers, sablons, sables, graves, gravillons et ballast (norme XP P 18-545). Les granulats les plus utilisés sont les suivants :
- les fillers, qui ont un diamètre inférieur à 2 mm et pour lesquels au moins 85 % des granulats ont un diamètre inférieur à 1,25 mm et au moins 70 % des granulats ont un diamètre inférieur à 0,063 mm,
- les sables de diamètre compris entre 0 et 4 mm (dans la norme 13-242, le diamètre pouvant aller jusqu'à 6 mm),
- les graves de diamètre supérieur à 6,3 mm,
- les gravillons de diamètre compris entre 2 mm et 63 mm.
Les sables sont donc compris dans la définition de granulat selon l'invention.
Les fillers peuvent notamment être d'origine calcaire ou dolomitique.

L'expression « additions minérales » désigne les laitiers (tels que définis dans la norme Ciment NF EN 197-1(2012) paragraphe 5.2.2), les laitiers d'aciérie, les matériaux pouzzolaniques (tels que définis dans la norme Ciment NF EN 197-1(2012) paragraphe 5.2.3), les cendres volantes (telles que définies dans la norme Ciment NF EN 197-1(2012) paragraphe 5.2.4), les schistes calcinés (tels que définis dans la norme Ciment NF EN 197-1 (2012) paragraphe 5.2.5), ou encore les fumées de silices (telles que définies dans la norme Ciment NF EN 197-1(2012) paragraphe 5.2.7 ou la norme prEN 197-5 paragraphe 5), les calcaires ou leurs mélanges.

L'invention est illustrée dans les exemples et de la figure qui suivent.

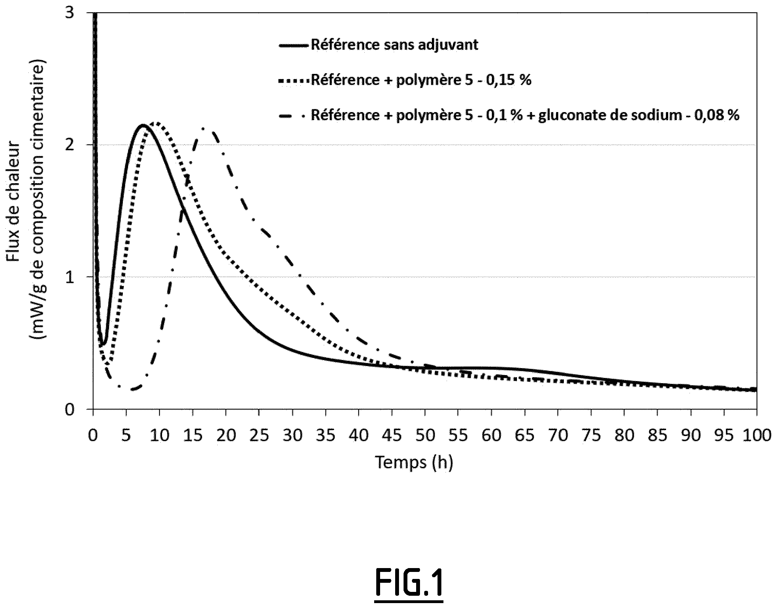

[Fig 1] La figure 1 représente la cinétique d'hydratation d'une composition cimentaire (flux de chaleur en mW/g de composition cimentaire en fonction du temps en heure) :
- d'une composition cimentaire sans adjuvant (référence) (trait plein),
- d'une composition cimentaire adjuvantée, l'adjuvant comprenant le polymère 5 à un dosage de 0,15 % en poids par rapport au poids sec de la composition cimentaire (la composition cimentaire adjuvantée étant exempte d'agent retardateur de prise) (trait en pointillés), ou
- d'une composition cimentaire adjuvantée, l'adjuvant comprenant le polymère 5 à 0,1 % en poids et du gluconate de sodium à 0,08 % en poids par rapport au poids sec de la composition cimentaire (trait mixte) (exemple 3).

### EXEMPLE 1 : Impact de la nature du polymère et de la présence d'un agent retardateur de prise sur la fluidification d'une composition cimentaire.

Les polymères décrits ci-dessous ont été testés sur un mélange de composition cimentaire et d'eau (pâte de ciment). Une étude rhéologique avec 2 heures d'hydratation a été effectuée.

La composition cimentaire utilisée était composée d'environ 50 % de clinker et environ 50 % d'un mélange métakaolin, calcaire et gypse (tableau 1).

**[Tableau 1]**

| Tableau 1-Analyse minéralogique par diffraction de rayons X de la composition cimentaire utilisée | | |
|---|---|---|
| **Nom de la phase** | **Formule** | **Teneur massique (%)** |
| Alite | Ca₃SiO₅ | 25,3-32,7 |
| Belite | Ca₂SiO₅ | 5,7-15,2 |
| Aluminate | Ca₃Al₂O₆ | 0,3-2,5 |
| Ferrite | Ca₄Al₂Fe₂O₁₀ | 6,8-8,1 |
| **Total phases clinker** | | **37,6-59,1** |
| Sulfate de calcium | | 7,6-8,1 |
| Quartz* | SiO₂ | 1,2-1,6 |
| Free lime* | CaO | 0,1-0,4 |
| Portlandite | Ca(OH)₂ | 0-1,3 |
| Calcite* | CaCO₃ | 13,5-15 |
| Aragonite* | CaCO₃ | 0,0-1,3 |
| Periclase* | MgO | 0,0-1,7 |
| Dolomite | CaMgCO₃ | 2,2-3,4 |
| Aphthitalite | K₃Na(SO₄)₂ | 0,0-0,5 |
| Thenardite* | Na₂SO₄ | 0,2-0,3 |
| Syngenite | K₂Ca(SO₄)₂ H₂0 | 0,0-0,7 |
| Mullite | Al₆Si₂O₁₃ | 1,8-2,0 |
| Hematite | Fe₂O₃ | 0,0-0,7 |
| Amorphous phases | | 16,2-17,4 |
| Kaolinite | Al₂Si₂O₅(OH)₄ | 2,7-3,4 |

### Description des polymères utilisés :

Les polymères utilisés dans les exemples sont des polymères peigne dont les groupes pendants sont liés à la chaine principale carbonée soit par des groupes éther (polymères 5 et 6), soit par des groupes esters (polymères 1 à 4 et 7).

Les polymères peignes dont les groupes pendants sont liés à la chaine principale carbonée par des groupes éthers ont été obtenus par polymérisation radicalaire libre avec du HPEG 2400 et sont constitués des unités de formules suivantes : 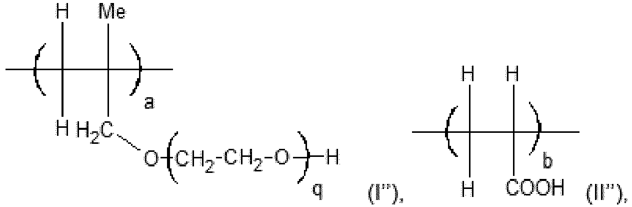 où a, b et q sont tels que définis dans le tableau 2 ci-dessous. Le nombre total moyen d'unités dans le polymère est la somme du nombre moyen d'unités de formule (I") et du nombre moyen d'unités de formule (II").

Le polymère 5 est un polymère tel que défini dans la demande.

Le pourcentage en unité de formule (I") du polymère 6 est supérieure à 30 %. Il s'agit donc d'un polymère comparatif.

Les polymères peignes dont les groupes pendants sont liés à la chaine principale carbonée par des groupes esters (comparatifs) ont été obtenus par polymérisation puis post-estérification pour greffer les groupes pendants, par exemple avec du MPEG 750 pour le polymère 7, ou un mélange de MPEG pour les polymères 1 et 4 (deux valeurs de « q » dans le tableau 2 ci-dessous). Ils sont constitués des unités de formules (XI) et (XII) suivantes : 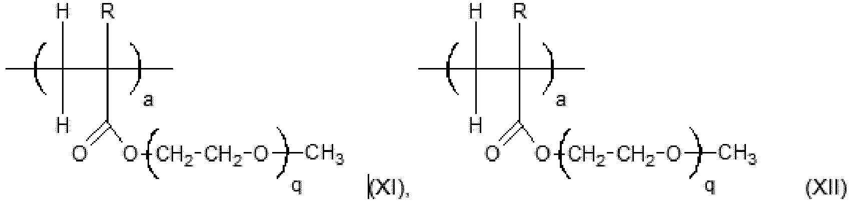 dans lesquelles R représente H ou un méthyle.

Le nombre total moyen d'unités dans le polymère est la somme du nombre moyen d'unités de formule (XI) et du nombre moyen d'unités de formule (XII).

**[Tableau 2]**

| Tableau 2 : q, a, b et nombre total moyen d'unités dans chaque polymère testé, et procédé de préparation. | | | | | |
|---|---|---|---|---|---|
| Polymère | Constitué des unités de formules | q | a* | b* | Procédé de préparation |
| 1 (comparatif) | (XI) et (XII) avec R = Me | q1 = 114 = | 0,20 | 0,80 | Polymérisation puis post-estérification |
| | | q2 = 45 | | | |
| 2 (comparatif) | (XI) et (XII) avec R = Me | 17 | 0,25 | 0,75 | Polymérisation puis post-estérification |
| 3 (comparatif) | (XI) et (XII) avec R = Me | 45 | 0,20 | 0,80 | Polymérisation puis post-estérification |
| 4 (comparatif) | (XI) et (XII) avec R = Me | 31 | 0,40 | 0,60 | Polymérisation puis post-estérification |
| | | q1 = 45 | | | |
| | | q2 = 17 | | | |
| 5 (invention) | (I") et (II") | 50 | 0,18 | 0,82 | Polymérisation radicalaire libre |
| 6 (comparatif) | (I") et (II") | 50 | 0,33 | 0,67 | Polymérisation radicalaire libre |
| 7 (comparatif) | (XI) et (XII) avec R = H | 17 | 0,47 | 0,53 | Polymérisation puis post-estérification |

| | | | | | |
|---|---|---|---|---|---|
| * : déterminé par chromatographie par perméation de gel (GPC pour « Gel Permeation Chromatography » en anglais). Que ce soit dans lors de la polymérisation radicalaire libre ou lors de la post-estérification, une certaine quantité de monomère résiduel reste en solution après la synthèse. Ces monomères résiduels sont quantifiables par GPC. La différence entre cette quantité résiduelle et la quantité de monomère de départ est la quantité de monomère qui a été polymérisé, et donc a, puis b = 1 - a. | | | | | |

### Protocole expérimental :

La composition cimentaire a été préparée comme suit, à l'aide d'un malaxeur KENWOOD KM011 CHEF TITANIUM avec un bol en inox (capacité 4,6 litres) et une pale d'agitation métallique en forme de feuille de sauge (hauteur 13 cm et largeur 13,6 cm), et sa fluidité a été mesurée comme suit :
1. L'eau et l'adjuvant sont pesés dans le bol du malaxeur, ensuite le malaxeur est démarré à une vitesse de 43 tours/min.
2. Le chronomètre est déclenché et la composition cimentaire est introduite dans le bol en 30 secondes.
3. La vitesse est augmentée à 96 tours/min et le mélange est malaxé pendant une minute.
4. Le malaxeur est stoppé pendant 30 secondes, la composition cimentaire adjuvantée éventuellement projetée sur les parois est raclée vers le centre avec une spatule.
5. La composition cimentaire adjuvantée est malaxée une minute à 96 tours / min.
A la fin du malaxage, la composition cimentaire adjuvantée obtenue, qui se présente sous forme d'une pâte, est versée dans la cellule de mesure cylindrique d'un rhéomètre Kinexus Pro (Netzsch) muni d'une géométrie de mesure de type ailette.

Cinq minutes après le début du malaxage, la composition cimentaire adjuvantée est soumise à un pré-cisaillement d'une minute à une vitesse de déformation de 200 s⁻¹. La composition cimentaire adjuvantée est ensuite soumise à une série de paliers décroissants de vitesse de déformation, par sauts logarithmiques de 200 à 0,01 s⁻¹ et le rhéomètre enregistre la contrainte à appliquer à chaque point. Ceci permet d'élaborer une courbe d'écoulement reliant la contrainte appliquée pour obtenir chaque valeur de vitesse de déformation. Ces courbes d'écoulement présentent un minimum de contrainte qui est interprété comme une contrainte seuil, soit une contrainte minimale à appliquer pour provoquer l'écoulement. Cette valeur varie à l'inverse de la fluidité, on cherche donc à la diminuer le plus possible.

Une mesure de courbe d'écoulement est effectuée ensuite toutes les 30 min jusqu'à 120 min après le début du malaxage pour vérifier l'évolution de la fluidité au cours du temps.

Dans une première série de tests, le ratio du poids d'eau sur le poids de la composition cimentaire (poids sec) était de 0,45. L'adjuvant était constitué d'un des polymères (pas d'agent retardateur). Pour chaque test, la proportion en polymère était de 0,1 % en poids par rapport au poids sec de la composition cimentaire à fluidifier. Les résultats sont fournis au tableau 3.

**[Tableau 3]**

| Tableau 3 : contrainte seuil de la composition cimentaire adjuvantée selon la nature du polymère de l'adjuvant. | | | | | |
|---|---|---|---|---|---|
| Contraintes seuil (Pa) | | | | | |
| Polymère | 5 min | 30 min | 60 min | 90 min | 120 min |
| 1 (comparatif) | 6,7 | 19,2 | 37,2 | 45,9 | 54,3 |
| 2 (comparatif) | 20,9 | 23,5 | 34,7 | 41,3 | 48,8 |
| 3 (comparatif) | 11,4 | 22,6 | 35,0 | 42,6 | 49,7 |
| 4 (comparatif) | 32,8 | 23,2 | 36,4 | 45,9 | 59,4 |
| 5 (invention) | 0,8 | 2,6 | 5,8 | 12,1 | 17,8 |

Ces résultats démontrent que le polymère 5 selon l'invention est de loin le meilleur fluidifiant. Il permet une diminution significative de la contrainte seuil initiale et une amélioration du maintien de fluidité de la composition cimentaire adjuvantée sur une durée supérieure ou égale à 120 minutes.

Dans une deuxième série de tests, le ratio du poids d'eau sur le poids de la composition cimentaire (poids sec) était de 0,35. L'adjuvant était constitué du polymère 5 (pas d'agent retardateur de prise). Au vu de la plus faible quantité d'eau par rapport à la première série de tests, le dosage en polymère 5 a été augmenté à 0,15 % en poids par rapport au poids sec de la composition cimentaire à fluidifier, afin d'obtenir les contraintes seuil souhaitées. Les résultats sont fournis au tableau 4 (ligne « polymère 5 »).

Dans une troisième série de tests, le ratio du poids d'eau sur le poids de la composition cimentaire (poids sec) a été maintenu à 0,35. L'adjuvant était constitué du polymère 5 et d'une solution de gluconate de sodium à titre d'agent retardateur de prise. Le dosage en polymère 5 a été diminué à 0,10 % en poids par rapport au poids sec de la composition cimentaire à fluidifier. Le dosage en gluconate de sodium était de 0,08 % en poids par rapport au poids sec de la composition cimentaire à fluidifier. Les résultats sont fournis au tableau 4 (ligne « polymère 5 + gluconate de sodium »).

**[Tableau 4]**

| Tableau 4 : contrainte seuil de la composition cimentaire adjuvantée selon la nature de l'adjuvant. | | | | | |
|---|---|---|---|---|---|
| Contraintes seuil (Pa) | | | | | |
| Adjuvant | 5 min | 30 min | 60 min | 90 min | 120 min |
| Polymère 5 (invention) | 3,5 | 9,8 | 17,4 | 22,8 | 28,6 |
| Polymère 5 + gluconate de sodium (invention) | 1,0 | 2,9 | 5,1 | 8,0 | 9,5 |

Les résultats montrent que l'ajout d'un agent retardateur de prise permet d'améliorer la fluidité de la composition cimentaire adjuvantée, et ce même en diminuant le dosage en polymère 5.

Dans une quatrième série de tests, le ratio du poids d'eau sur le poids de la composition cimentaire (poids sec) a été maintenu à 0,35. L'adjuvant était constitué d'un des polymères et d'une solution de gluconate de sodium à titre d'agent retardateur de prise. Le dosage en polymère était de 0,125 % en poids par rapport au poids sec de la composition cimentaire à fluidifier. Le dosage en gluconate de sodium était de 0,1 % en poids par rapport au poids sec de la composition cimentaire à fluidifier. Les résultats sont fournis au tableau 5.

**[Tableau 5]**

| Tableau 5 : contrainte seuil de la composition cimentaire adjuvantée selon la nature de l'adjuvant. | | | | | |
|---|---|---|---|---|---|
| Contraintes seuil (Pa) | | | | | |
| Adjuvant | 5 min | 30 min | 60 min | 90 min | 120 min |
| Polymère 5 + gluconate de sodium (invention) | 5,2 | 4,8 | 4,9 | 4,8 | 5,4 |
| Polymère 6 + gluconate de sodium (comparatif) | 76,8 | 57,1 | 95,8 | 115,1 | 120,7 |
| Polymère 7 + gluconate de sodium (comparatif) | 68,1 | 49,7 | 61,8 | 72,9 | 87,3 |

Ces résultats montrent qu'un adjuvant comprenant le polymère 5 selon l'invention et du gluconate de sodium en tant qu'agent retardateur de prise est de loin le meilleur fluidifiant par rapport à des adjuvants comprenant d'autres polymères et le même agent retardateur de prise.

### EXEMPLE 2 : Impact de la nature de l'agent retardateur de prise de l'adjuvant sur la fluidification d'une composition cimentaire

Le polymère 5 décrit ci-dessus a été testé avec différents agents retardateur de prise sur une composition cimentaire à fluidifier. Une étude rhéologique avec 2 heures d'hydratation a été effectuée.

La composition cimentaire et le protocole expérimental sont identiques à ceux décrits dans l'exemple 1.

Les agents retardateurs de prise choisis sont des retardateurs classiques utilisés pour réduire la cinétique d'hydratation du ciment. Parmi ceux-ci, des acides carboxylique (acide citrique, acide tartrique, acide salicylique), un acide phosphonique sous forme neutre ou un sel de celui-ci et un sucre de type saccharose ont été évalués.

Le ratio du poids d'eau sur le poids de la composition cimentaire (poids sec) était de 0,35. L'adjuvant était constitué du polymère 5 et de l'agent retardateur de prise. Le dosage en polymère 5 était de 0,125 % en poids par rapport au poids sec de la composition cimentaire à fluidifier. Le dosage en agent retardateur de prise était de 0,1 % en poids par rapport au poids sec de la composition cimentaire à fluidifier. Les résultats sont fournis au tableau 6.

**[Tableau 6]**

| Tableau 6 : contrainte seuil de la composition cimentaire adjuvantée selon la nature de l'adjuvant comprenant le polymère 5 et un agent retardateur de prise de nature différente. | | | | | |
|---|---|---|---|---|---|
| Contraintes seuil (Pa) | | | | | |
| Adjuvant | 5 min | 30 min | 60 min | 90 min | 120 min |
| Polymère 5 + gluconate de sodium | 5,2 | 4,8 | 4,9 | 4,8 | 5,4 |
| Polymère 5 + acide citrique | 5,9 | 49,0 | 76,7 | 71,4 | 68,8 |
| Polymère 5 + acide tartrique | 9,6 | 164,8 | 256,3 | 280,7 | 258,3 |
| Polymère 5 + acide salicylique | 70,7 | 111,2 | 92,1 | 81,0 | 78,1 |
| Polymère 5 + sucre (saccharose) | 18,0 | 49,2 | 43,2 | 37,4 | 34,0 |
| Polymère 5 + acide phosphonique (ATMP) | 2,1 | 3,1 | 4,4 | 5,7 | 6,8 |

Ces résultats montrent que les adjuvants comprenant, en plus du polymère 5, le gluconate de sodium ou le phosphonate permettent une meilleure fluidification que ceux comprenant d'autres agents retardateurs de prise.

### EXEMPLE 3 : Impact des adjuvants sur la cinétique d'hydratation de la composition cimentaire

Des essais en microcalorimétrie isotherme (calorimètre TAM Air, TA Instruments) ont permis d'évaluer l'impact des adjuvants sur la cinétique d'hydratation de la composition cimentaire. L'hydratation de la composition cimentaire étant une réaction exothermique, la calorimétrie isotherme permet d'obtenir l'évolution du flux de chaleur dégagée par gramme de la composition cimentaire en fonction du temps.

La pâte de ciment est préparée à partir d'un mélange de matériau cimentaire, d'adjuvants et d'eau. Un rapport eau sur liant (E/L) de 0,35 est fixé pour toutes les pâtes. Le système d'agitation est composé d'une pâle d'agitation turbine (diamètre 2,5 cm) fixée à un malaxeur IKA et d'un bécher en inox de 50 mL. Les adjuvants et l'eau sont d'abord pesés et mélangés dans le bécher en inox. L'eau apportée par l'adjuvant est soustraite de l'eau de gâchage. La poudre de composition cimentaire est ajoutée à l'eau ce qui marque le début de l'hydratation. La suspension est mélangée durant une minute à la vitesse de 500 rotations par minute. Puis le malaxage est stoppé, les bords du bécher et la pâle sont raclés durant une minute. Enfin l'agitation est relancée à une vitesse de 1000 rotations par minute pendant une minute. La pâte cimentaire est alors prête pour les analyses.

Pour reproduire les mêmes conditions expérimentales que celles des essais rhéologiques, les pâtes cimentaires ont été préparées :
- sans adjuvant (référence),
- avec le polymère 5 à un dosage de 0,15 % en poids par rapport au poids sec de la composition cimentaire (sans agent retardateur de prise), ou
- avec un mélange de polymère 5 à 0,1 % et gluconate de sodium à 0,08 % en poids par rapport au poids sec de la composition cimentaire.
Les résultats sont illustrés à la figure 1 et montrent que le polymère 5 à un dosage de 0,15 % en poids par rapport au poids sec de la composition cimentaire apporte un retard d'environ 30 minutes par rapport à la référence contenant la composition cimentaire sans adjuvant. Le polymère 5 à un dosage de 0,1 % en poids par rapport au poids sec de la composition cimentaire en combinaison avec le gluconate de sodium à un dosage de 0,08 % en poids par rapport au poids sec de la composition cimentaire retardent d'environ 6 heures la cinétique d'hydratation des compositions cimentaires par rapport à la référence contenant la composition cimentaire sans adjuvant. Cependant, l'agent retardateur de prise n'a aucun impact sur l'intensité du pic principal d'hydratation de la composition cimentaire.

### EXEMPLE 4 : Exemple avec une autre composition cimentaire : Impact de la nature du polymère et de la présence d'un agent retardateur de prise sur la fluidification d'une composition cimentaire 2.

Des essais sont réalisés avec une composition cimentaire 2 comprenant un clinker de nature différente de celui précédemment utilisé (en rupture de stock), mais dont le mélange métakaolin, calcaire et gypse est tel que décrit dans le Tableau 1. Au vu de la nature différente du clinker, les résultats qui suivent ne peuvent pas strictement être comparés avec ceux des tableaux 4 et 5 ci-dessus.

La composition cimentaire 2 utilisée était composée d'environ 50 % de clinker et environ 50 % du mélange métakaolin, calcaire et gypse (tableau 7).

**[Tableau 7]**

| Tableau 7-Analyse minéralogique par diffraction de rayons X de la composition cimentaire 2 utilisée | | |
|---|---|---|
| **Nom de la phase** | **Formule** | **Teneur massique (%)** |
| Alite | Ca₃SiO₅ | 24,7-25,7 |
| Belite | Ca₂SiO₅ | 11,6-12,6 |
| Aluminate | Ca₃Al₂O₆ | 0,9-1,9 |
| Ferrite | Ca₄Al₂Fe₂O₁₀ | 5,9-9,9 |
| **Total phases clinker** | | **44,1-51,1** |
| Sulfate de calcium | | 7,6-8,1 |
| Quartz* | SiO₂ | 1,2-1,6 |
| Free lime* | CaO | 0,1-0,3 |
| Portlandite | Ca(OH)₂ | 0,0-0,5 |
| Calcite* | CaCO₃ | 13,5-15,0 |
| Aragonite* | CaCO₃ | 0,0-0,2 |
| Periclase* | MgO | 0,0-0,2 |
| Dolomite | CaMgCO₃ | 2,2-3,4 |
| Aphthitalite | K₃Na(SO₄)₂ | 0,0 |
| Thenardite* | Na₂SO₄ | 0,2-0,3 |
| Syngenite | K₂Ca(SO₄)₂ H₂0 | 0,0-0,7 |
| Mullite | Al_{g}Si₂O₁₃ | 1,8-2,0 |
| Hematite | Fe₂O₃ | 0,0 |
| Amorphous phases | | 16^{,}2-17,4 |
| Kaolinite | Al₂Si₂O₅(OH)₄ | 2,7-3,4 |

Le protocole expérimental est identique à ceux décrits dans les exemples 1 et 2.

Le ratio du poids d'eau sur le poids de la composition cimentaire 2 (poids sec) était de 0,35.

L'adjuvant était :
- soit du polymère 5 (exempt d'agent retardateur) avec un dosage de 0,1 % en poids par rapport au poids sec de la composition cimentaire 2 à fluidifier,
- soit du polymère 5 et du gluconate de sodium en tant qu'agent retardateur de prise, avec un dosage de 0,1 % en poids de polymère 5 et de 0,08 % en poids de gluconate de sodium, chacun par rapport au poids sec de la composition cimentaire 2 à fluidifier,
- soit du polymère 6 (comparatif) (exempt d'agent retardateur) avec un dosage de 0,1 % en poids par rapport au poids sec de la composition cimentaire 2 à fluidifier.

Les résultats sont fournis au tableau 8.

**[Tableau 8]**

| Tableau 8 : contrainte seuil de la composition cimentaire 2 adjuvantée selon la nature de l'adjuvant. | | | | | | | |
|---|---|---|---|---|---|---|---|
| | | | Contraintes seuil (Pa) | | | | |
| | Adjuvant | agent retardateur de prise | 5 min | 30 min | 60 min | 90 min | 120 min |
| invention | 0,1 % polymère 5 | aucun | 20,0 | 35,2 | 53,9 | 68,6 | 86,6 |
| invention | 0,1 % polymère 5 | 0,08 % gluconate de sodium | 1,6 | 0,7 | 0,8 | 1,0 | 1,0 |
| comparatif | 0,1 % polymère 6 | aucun | 24,6 | 56,2 | 93,2 | 125,0 | 160,2 |

L'utilisation de 0,1 % de polymère 5 en poids par rapport au poids sec de la composition cimentaire 2 à fluidifier, conduit à une augmentation de la contrainte seuil de la composition cimentaire 2 adjuvantée alors que l'utilisation de 0,1 % en poids de polymère 5 et de 0,08 % en poids de gluconate de sodium, chacun par rapport au poids sec de la composition cimentaire 2 à fluidifier, permet de maintenir une contrainte seuil à un niveau faible et constant.

L'utilisation de 0,1 % de polymère 6 (comparatif) en poids par rapport au poids sec de la composition cimentaire 2 à fluidifier, conduit à une plus forte augmentation de la contrainte seuil de la composition cimentaire 2 adjuvantée que celle obtenue par l'utilisation de 0,1 % de polymère 5 (invention) en poids par rapport au poids sec de la composition cimentaire 2 à fluidifier. Le polymère 6 est moins performant que le polymère 5.

## Revendications

1. Composition cimentaire adjuvantée comprenant :
- une composition cimentaire comprenant :
- de 20 à 64 % en poids de clinker,
- de 5 à 60 % en poids d'argile activée,
- de 0 à 35 % en poids de calcaire,
- de 0 à 10 % en poids de sulfate de calcium,
les proportions en clinker, en argile activée, en calcaire et en sulfate de calcium étant par rapport au poids sec de la composition cimentaire, et
- un adjuvant comprenant un polymère comprenant des unités de formules (I) et (II) suivantes : 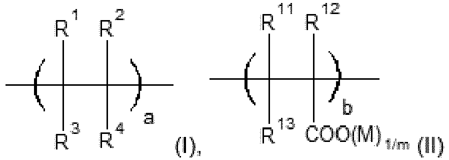
dans lesquelles :
- R¹ et R² représentent indépendamment un hydrogène ou un méthyle,
- R³ représente un hydrogène ou un groupe de formule -COO(M)_{1/m}
- R⁴ représente un groupe de formule -(CH₂)ₚ-(OAlk)_{q}-R₅ dans lequel :
- p représente 1 ou 2,
- q représente un nombre entier de 3 à 300,
- le Alk de chaque unité OAlk du groupe -(OAlk)_{q}- représente indépendamment un alkylène linéaire ou ramifié comprenant de 2 à 4 atomes de carbone,
- R⁵ représente -OH ou un alkoxyle linéaire ou ramifié comprenant de 1 à 4 atomes de carbone,
- R¹¹ et R¹² représentent indépendamment un hydrogène ou un méthyle,
- R¹³ représente un hydrogène ou un groupe de formule -COO(M)_{1/m},
- M représente H ou un cation de valence m,
- lorsque M représente H, m représente 1 et lorsque M représente un cation, m est la valence du cation M,
- a est un nombre de 0,05 à 0,25, tel que (100 x a) représente le pourcentage molaire d'unités de formule (I) au sein du polymère, et
- b est un nombre de 0,75 à 0,95, tel que (100 x b) représente le pourcentage molaire d'unités de formule (II) au sein du polymère,
la proportion en polymère de l'adjuvant étant de 0,001 % à 5 % en poids, notamment de 0,005 % à 1 %, de préférence de 0,01 % à 0,2 % par rapport au poids sec de la composition cimentaire.

2. Composition cimentaire adjuvantée selon la revendication 1, dans laquelle le polymère de l'adjuvant comprend des unités de formule (I') et (II') suivantes : 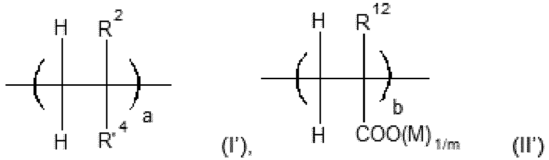 dans lesquelles :
- R² représente indépendamment un hydrogène ou un méthyle, de préférence un méthyle,
- R'⁴ représente un groupe de formule -CH₂-(O-CH₂-CH₂)_{q}-R₅ dans lequel :
- q représente un nombre entier de 3 à 500,
- R⁵ représente -OH ou -OMe, de préférence -OH,
- a est un nombre de 0,05 à 0,25, tel que (100 x a) représente le pourcentage molaire d'unités de formule (I') au sein du polymère.
- R¹² représente un hydrogène ou un méthyle, de préférence un hydrogène,
- M représente H ou un cation de valence m,
- lorsque M représente H, m représente 1 et lorsque M représente un cation, m est la valence du cation M,
- b est un nombre de 0,75 à 0,95, tel que (100 x b) représente le pourcentage molaire d'unités de formule (II') au sein du polymère.

3. Composition cimentaire adjuvantée selon la revendication 1 ou 2, dans laquelle, dans les formules du polymère de l'adjuvant :
- a est un nombre de 0,05 à 0,20, de préférence a représente un nombre entre 0,10 et 0,20, et
- b est un nombre de 0,80 à 0,95, de préférence b représente un nombre entre 0,80 et 0,90.

4. Composition cimentaire adjuvantée selon l'une quelconque des revendications 1 à 3, dans laquelle, dans les formules du polymère de l'adjuvant :
- q représente un nombre entier de 5 à 200, notamment de 10 à 100, de préférence de 25 à 75,
- R⁵ représente -OH ou -OMe, de préférence R⁵ représente -OH,
- a est un nombre de 0,05 à 0,20, de préférence a représente un nombre entre 0,10 et 0,20,
- b est un nombre de 0,80 à 0,95, de préférence b représente un nombre entre 0,80 et 0,90, et/ou
- M représente H ou un cation monovalent ou bivalent, m représentant alors 1 ou 2, le cation monovalent étant de préférence choisi parmi un sel d'ammonium NH₄⁺, un cation ammonium primaire, secondaire, tertiaire ou quaternaire et un cation d'un métal alcalin, tels qu'un ion sodium, lithium ou potassium, et le cation bivalent étant de préférence un cation d'un métal alcalinoterreux, tel qu'un ion magnésium ou calcium.

5. Composition cimentaire adjuvantée selon l'une quelconque des revendications 1 à 4, dans laquelle l'adjuvant comprend un agent retardateur de prise.

6. Composition cimentaire adjuvantée selon la revendication 5, dans laquelle l'agent retardateur de prise est choisi parmi :
- un acide phosphonique sous forme neutre ou un sel de celui-ci,
- un phosphate,
- et les mélanges de ceux-ci.

7. Composition cimentaire adjuvantée selon la revendication 6, dans laquelle l'agent retardateur de prise est l'acide amino tri méthylène phosphonique (ATMP).

8. Composition cimentaire adjuvantée selon la revendication 5, dans laquelle l'agent retardateur de prise est l'acide gluconique sous forme neutre ou un sel de celui-ci, un acide phosphonique sous forme neutre ou un sel de celui-ci, ou un mélange de ceux-ci.

9. Composition cimentaire adjuvantée selon l'une quelconque des revendications 1 à 8, comprenant moins de 0,001 % en poids d'alcanolamine tertiaire comprenant de 1 à 6 atomes de carbone par rapport au poids sec de la composition cimentaire adjuvantée.

10. Composition hydraulique comprenant la composition cimentaire adjuvantée selon l'une quelconque des revendications 1 à 9, de l'eau, un granulat et éventuellement une addition minérale.

11. Utilisation d'un adjuvant tel que défini à l'une quelconque des revendications 1 à 8 comme fluidifiant d'une composition cimentaire comprenant :
- de 20 à 64 % en poids de clinker,
- de 5 à 60 % en poids d'argile activée,
- de 0 à 35 % en poids de calcaire,
- de 0 à 10 % en poids de sulfate de calcium,
les proportions étant par rapport au poids sec de la composition cimentaire.

12. Utilisation selon la revendication 11, dans laquelle l'adjuvant est utilisé de manière que la proportion en polymère soit de 0,001 % à 5 % en poids, notamment de 0,005 % à 1 %, de préférence de 0,01 % à 0,2 % par rapport au poids sec de la composition cimentaire.

13. Utilisation selon l'une quelconque des revendications 11 à 12, dans laquelle la composition cimentaire comprend moins de 0,001 % en poids d'alcanolamine tertiaire comprenant de 1 à 6 atomes de carbone par rapport au poids sec de la composition cimentaire.

## Patentansprüche

1. Adjuvierte Zementzusammensetzung, umfassend:
- eine Zementzusammensetzung, umfassend:
- von 20 bis 64 Gewichts-% Klinker,
- von 5 bis 60 Gewichts-% aktivierte Tonerde,
- von 0 bis 35 Gewichts-% Kalkstein,
- von 0 bis 10 Gewichts-% Calciumsulfat,
wobei die Anteile an Klinker, aktiviertem Ton, Kalkstein und Calciumsulfat auf das Trockengewicht der Zementzusammensetzung bezogen sind, und
- ein Adjuvans, umfassend ein Polymer, umfassend Einheiten von folgenden Formeln (I) und (II): 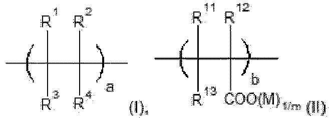
wobei:
- R¹ und R² unabhängig Wasserstoff oder Methyl darstellen,
- R³ Wasserstoff oder eine Gruppe von Formel -COO(M)_{1/m} darstellt
- R⁴ eine Gruppe von Formel -(CH₂)ₚ (OAlk)_{q}-R₅ darstellt, wobei:
- p 1 oder 2 darstellt,
- q eine ganze Zahl von 3 bis 300 darstellt,
- das Alk von jeder OAlk-Einheit der Gruppe -(OAlk)_{q}- unabhängig ein lineares oder verzweigtes Alkylen darstellt, umfassend 2 bis 4 Kohlenstoffatome,
- R⁵ -OH oder ein lineares oder verzweigtes Alkoxyl darstellt, umfassend 1 bis 4 Kohlenstoffatome,
- R¹¹ und R¹² unabhängig Wasserstoff oder Methyl darstellen,
- R¹³ Wasserstoff oder eine Gruppe von Formel -COO(M)_{1/m} darstellt,
- M H oder ein Kation mit Wertigkeit m darstellt,
- wenn M H darstellt, m 1 darstellt, und wenn M ein Kation darstellt, m die Wertigkeit des Kations M ist,
- a eine Zahl von 0,05 bis 0,25 ist, sodass (100 x a) die Molprozente der Einheiten von Formel (I) innerhalb des Polymers darstellt, und
- b eine Zahl von 0,75 bis 0,95 ist, sodass (100 x b) den molaren Prozentsatz der Einheiten von Formel (II) innerhalb des Polymers darstellt,
wobei der Polymeranteil des Adjuvans 0,001 Gewichts-% bis 5 Gewichts-%, insbesondere 0,005 Gewichts-% bis 1 Gewichts-%, vorzugsweise 0,01 Gewichts-% bis 0,2 Gewichts-%, bezogen auf das Trockengewicht der Zementzusammensetzung, ist.

2. Adjuvierte Zementzusammensetzung nach Anspruch 1, wobei das Polymer des Adjuvans Einheiten von folgenden Formeln (I') und (II') umfasst: 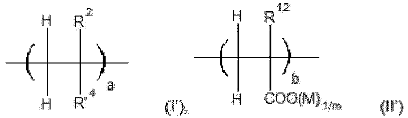 wobei:
- R² unabhängig Wasserstoff oder Methyl, vorzugsweise Methyl, darstellt,
- R'⁴ eine Gruppe von Formel -CH₂-(O-CH₂-CH₂)_{q}-R₅ darstellt, wobei:
- q eine ganze Zahl von 3 bis 500 darstellt,
- - R⁵ -OH oder -OMe, vorzugsweise -OH, darstellt,
- a eine Zahl von 0,05 bis 0,25 ist, sodass (100 x a) die Molprozente der Einheiten von Formel (I') innerhalb des Polymers darstellt, und
- R¹² Wasserstoff oder Methyl, vorzugsweise Wasserstoff, darstellt,
- M H oder ein Kation mit Wertigkeit m darstellt,
- wenn M H darstellt, m 1 darstellt, und wenn M ein Kation darstellt, m die Wertigkeit des Kations M ist,
- b eine Zahl von 0,75 bis 0,95 ist, sodass (100 x b) den molaren Prozentsatz der Einheiten von Formel (II') innerhalb des Polymers darstellt.

3. Adjuvierte Zementzusammensetzung nach Anspruch 1 oder 2, wobei in den Formeln des Polymers des Adjuvans:
- a eine Zahl von 0,05 bis 0,20 ist, a vorzugsweise eine Zahl zwischen 0,10 und 0,20 darstellt, und
- b eine Zahl von 0,80 bis 0,95 ist, b vorzugsweise eine Zahl zwischen 0,80 und 0,90 darstellt.

4. Adjuvierte Zementzusammensetzung nach einem der Ansprüche 1 bis 3, wobei in den Formeln des Polymers des Adjuvans:
- q eine ganze Zahl von 5 bis 200, insbesondere von 10 bis 100, vorzugsweise von 25 ä 75 darstellt,
- - R⁵ -OH oder -OMe darstellt, R⁵ vorzugsweise -OH darstellt,
- a eine Zahl von 0,05 bis 0,20 ist, a vorzugsweise eine Zahl zwischen 0,10 und 0,20 darstellt,
- b eine Zahl von 0,80 bis 0,95 ist, b vorzugsweise eine Zahl zwischen 0,80 und 0,90 darstellt, und/oder
- - M H oder ein einwertiges oder zweiwertiges Kation darstellt, m dann 1 oder 2 darstellt, wobei das einwertige Kation vorzugsweise ausgewählt ist aus einem Ammoniumsalz NH₄⁺, einem primären, sekundären, tertiären oder quaternären Ammoniumkation und einem Kation eines Alkalimetalls, wie beispielsweise ein Natrium-, Lithium- oder Kaliumion, und das zweiwertige Kation vorzugsweise ein Kation eines Erdalkalimetalls, wie beispielsweise ein Magnesium- oder Calciumion, ist.

5. Adjuvierte Zementzusammensetzung nach einem der Ansprüche 1 bis 4, wobei das Zusatzmittel einen Abbindeverzögerer umfasst.

6. Adjuvierte Zementzusammensetzung nach Anspruch 5, wobei der Abbindeverzögerer ausgewählt ist aus:
- einer Phosphonsäure in neutraler Form oder einem Salz davon,
- einem Phosphat,
- und Gemischen davon.

7. Adjuvierte Zementzusammensetzung nach Anspruch 6, wobei der Abbindeverzögerer Aminotrimethylenphosphonsäure (ATMP) ist.

8. Adjuvierte Zementzusammensetzung nach Anspruch 5, wobei der Abbindeverzögerer Gluconsäure in neutraler Form oder ein Salz davon, Phosphonsäure in neutraler Form oder ein Salz davon oder ein Gemisch davon ist.

9. Adjuvierte Zementzusammensetzung nach einem der Ansprüche 1 bis 8, umfassend weniger als 0,001 Gewichts-% tertiäres Alkanolamin, umfassend 1 bis 6 Kohlenstoffatome, bezogen auf das Trockengewicht der adjuvierten Zementzusammensetzung.

10. Hydraulische Zusammensetzung, umfassend die adjuvierte Zementzusammensetzung nach einem der Ansprüche 1 bis 9, Wasser, einen Zuschlagstoff und optional einen mineralischen Zusatz.

11. Verwendung eines Adjuvans, wie definiert in einem der Ansprüche 1 bis 8, als Verflüssiger einer Zementzusammensetzung, umfassend:
- von 20 bis 64 Gewichts-% Klinker,
- von 5 bis 60 Gewichts-% aktivierte Tonerde,
- von 0 bis 35 Gewichts-% Kalkstein,
- von 0 bis 10 Gewichts-% Calciumsulfat,
wobei sich die Anteile auf das Trockengewicht der Zementzusammensetzung beziehen.

12. Verwendung nach Anspruch 11, wobei das Zusatzmittel verwendet wird, sodass der Polymeranteil 0,001 Gewichts-% bis 5 Gewichts-%, insbesondere 0,005 Gewichts-% bis 1 Gewichts-%, vorzugsweise 0,01 Gewichts-% bis 0,2 Gewichts-%, bezogen auf das Trockengewicht der Zementzusammensetzung, ist.

13. Verwendung nach einem der Ansprüche 11 bis 12, wobei die Zementzusammensetzung weniger als 0,001 Gewichts-% tertiäres Alkanolamin, umfassend 1 bis 6 Kohlenstoffatome, bezogen auf das Trockengewicht der Zementzusammensetzung, umfasst.

## Claims

1. An admixed cement composition comprising:
- a cement composition comprising:
- from 20 to 64 weight % clinker,
- from 5 to 60 weight % activated clay,
- from 0 to 35 weight % limestone,
- from 0 to 10 weight % calcium sulfate,
the proportions of clinker, activated clay, limestone and calcium sulfate being relative to the dry weight of the cement composition and
- an admixture comprising a polymer comprising units of following formulas (I) and (II): 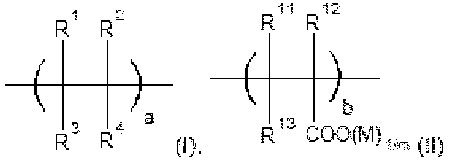
where:
- R¹ and R² are each independently a hydrogen or a methyl,
- R³ is a hydrogen or a group of formula -COO(M)_{1/m}
- R⁴ is a group of formula -(CH₂)ₚ-(OAlk)_{q}-R₅ where:
- p is 1 or 2,
- q is an integer of 3 to 300,
- the Alk in each OAlk unit of the group -(OAlk)_{q}- is independently a linear or branched alkylene having 2 to 4 carbon atoms,
- R⁵ is -OH or a linear or branched alkoxyl having 1 to 4 carbon atoms,
- R¹¹ and R¹² are each independently a hydrogen or a methyl,
- R¹³ is a hydrogen or a group of formula -COO(M)_{1/m},
- M is H or a cation of valence m,
- when M is H, m is 1 and when M is a cation, m is the valence of the cation M,
- a is a number from 0.05 to 0.25, such that (100 x a) represents the molar percentage of units of formula (I) within the polymer, and
- b is a number from 0.75 to 0.95, such that (100 x b) represents the molar percentage of units of formula (II) within the polymer,
the proportion of polymer in the admixture being from 0.001 weight % to 5 weight %, in particular from 0.005 weight % to 1 weight %, preferably from 0.01 weight % to 0.2 weight % relative to the dry weight of the cement composition.

2. The admixed cement composition according to claim 1, wherein the polymer of the admixture comprises units of following formulas (I') and (II'): 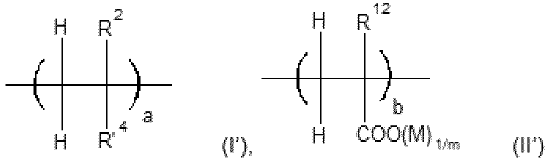 where:
- R² is independently a hydrogen or a methyl, preferably a methyl,
- R'⁴ is a group of formula -CH₂-(O-CH₂-CH₂)_{q}-R₅ where:
- q is an integer of 3 to 500,
- R⁵ is -OH or -OMe, preferably -OH,
- a is a number from 0.05 to 0.25, such that (100 x a) represents the molar percentage of units of formula (I') within the polymer,
- R¹² is a hydrogen or a methyl, preferably a hydrogen,
- M is H or a cation of valence m,
- when M is H, m is 1 and when M is a cation, m is the valence of the cation M,
- b is a number from 0.75 to 0.95, such that (100 x b) represents the molar percentage of units of formula (II') within the polymer.

3. The admixed cement composition according to claim 1 or 2 wherein, in the formulae of the polymer of the admixture:
- a is a number from 0.05 to 0.20, preferably a is a number of between 0.10 and 0.20, and
- b is a number from 0.80 to 0.95, preferably b is a number between 0.80 and 0.90.

4. The admixed cement composition according to anyone of claims 1 to 3 wherein, in the formulae of the polymer of the admixture:
- q is an integer of 5 to 200, in particular of 10 to 100, preferably of 25 to 75,
- R⁵ is -OH or -OMe, preferably R⁵ is -OH,
- a is a number from 0.05 to 0.20, preferably a is a number between 0.10 and 0.20,
- b is a number from 0.80 to 0.95, preferably b is a number between 0.80 and 0.90, and/or
- M is H or a monovalent or bivalent cation, m then being 1 or 2, the monovalent cation preferably being selected from among an ammonium salt NH₄⁺, a primary, secondary, tertiary or quaternary ammonium cation, and a cation of an alkali metal such as a sodium, lithium or potassium ion, and the bivalent cation preferably being a cation of an alkaline-earth metal such as a magnesium or calcium ion.

5. The admixed cement composition according to any of claims 1 to 4, wherein the admixture comprises a set retarding agent.

6. The admixed cement composition according to claim 5, wherein the set retarding agent is chosen among:
- a phosphonic acid in neutral form or a salt thereof,
- a phosphate,
- and mixtures thereof.

7. The admixed cement composition according to claim 6, wherein the set retarding agent is amino tri methylene phosphonic acid (ATMP).

8. The admixed cement composition according to claim 5, wherein the set retarding agent is gluconic acid in neutral form or a salt thereof, a phosphonic acid in neutral form or a salt thereof, or a mixture thereof.

9. The admixed cement composition according to any of claims 1 to 8, comprising less than 0.001 weight % of tertiary alkanolamine having 1 to 6 carbon atoms relative to the dry weight of the admixed cement composition.

10. A hydraulic composition comprising the admixed cement composition according to any of claims 1 to 9, water, an aggregate and optionally a mineral addition.

11. Use of an admixture such as defined in any of claims 1 to 8 as fluidifier of a cement composition comprising:
- from 20 to 64 weight % clinker,
- from 5 to 60 weight % activated clay,
- from 0 to 35 weight % limestone,
- from 0 to 10 weight % calcium sulfate,
the proportions being relative to the dry weight of the cement composition.

12. The use according to claim 11, wherein the admixture is used so that the proportion of polymer is from 0.001 weight % to 5 weight %, in particular from 0.005 weight % to 1 weight %, preferably from 0.01 weight % to 0.2 weight % relative to the dry weight of the cement composition.

13. The use according to any of claims 11 to 12, wherein the cement composition comprises less than 0.001 weight % of tertiary alkanolamine having 1 to 6 carbon atoms relative to the dry weight of the cement composition.
